# EUROPEAN PATENT APPLICATION

(11) **EP 2 743 837 A1**
(43) Date of publication of application: **18.06.2014**
(21) Application number: 12822101.7
(22) Date of filing: 02.07.2012
(51) Int. Cl.: G06F 17/30

(54) **SEARCH METHOD, DEVICE AND SYSTEM**

(30) Priority: 08.08.2011 CN 201110226173
(71) Applicant: Tencent Technology (Shenzhen) Co., Ltd, Guangdong 518000 (CN)
(72) Inventor: YANG, Haisong, Shenzhen Guangdong 518000 (CN); ZHANG, Xiaopeng, Shenzhen Guangdong 518000 (CN); HE, Jie, Shenzhen Guangdong 518000 (CN); CAO, Fang, Shenzhen Guangdong 518000 (CN)
(74) Representative: Delumeau, François Guy
(86) International application number: PCT/CN2012/078028
(87) International publication number: WO 2013/020424

(57) **Abstract**

The present invention, pertaining to the field of computer technologies, discloses a search method, apparatus, and system. The method includes: acquiring search request information submitted by a user and login information of the user; obtaining friend relationship chain data of the user according to the login information of the user; and searching, according to the search request information and the friend relationship chain data of the user, in SNS data to obtain an SNS search result. The apparatus includes: an acquiring module, a sending module, and a searching module. According to the present invention, a traditional search engine is combined with an SNS search engine, such that a user is capable of detecting or acquiring his or her friend data, data of users having the same interest and hobby, and high quality data based on user recognition from the SNS, thereby enriching search results.

## Description

This application claims priority to Chinese Patent Application No. 201110226173.1, filed before Chinese Patent Office on August 8, 2011 and entitled "SEARCH METHOD, APPARATUS, AND SYSTEM", which is incorporated herein by reference in its entirety.

### FIELD OF THE INVENTION

The present disclosure relates to the field of computer technologies, and in particular, to a search method, apparatus, and system.

### BACKGROUND OF THE INVENTION

With an explosive growth of mass Internet information, search engines have become an important tool in people's study, life, and work. Meanwhile, with the development of the Internet, social networking services (SNS), as a popular way of friend making in terms of self-presentation, information exchange and sharing, are becoming a hot pursuit among more and more people.

According to a conventional search technology, after a user inputs search request information, a server searches in a preset information base according to the search request information, for matched information. For example, if a search keyword is "Zhang San", the search result is personal information of a person named Zhang San. The personal information includes information of name and location of the user.

During implementation of the present invention, the inventors find that the prior art has at least the following problem: In the prior art, the search result only includes basic personal information of the user, and the search result is too simple.

### SUMMARY OF THE INVENTION

To enrich search results of users, embodiments of the present disclosure provide a search method, apparatus, and system. The technical solutions are as follows:
In one aspect, embodiments of the present disclosure provide a search method, including the following steps:
   acquiring search request information submitted by a user and login information of the user;
   obtaining friend relationship chain data of the user according to the login information of the user; and
   searching, according to the search request information and the friend relationship chain data of the user, in SNS data to obtain an SNS search result.

The obtaining friend relationship chain data of the user according to the login information of the user specifically includes:
according to the login information of the user, performing matching in a mapping relationship between login information of users and personal information of users to obtain personal information of the user; and
according to the personal information of the user, performing matching in the mapping relationship between personal information of users and friend relationship chain data of users to obtain the friend relationship chain data of the user.

The searching, according to the search request information and the friend relationship chain data of the user, in SNS data to obtain an SNS search result specifically includes:
according to the friend relationship chain data of the user, acquiring SNS data of friends of the user from SNS data in an SNS index server; and
according to the search request information, searching in the SNS data of the friends of the user to obtain the SNS search result.

Furthermore, after the acquiring search request information submitted by a user and login information of the user, the method further includes:
according to the search request information, searching in a mapping relationship between search keywords and personal information bases of users, to obtain a traditional search result; and
combining the SNS search result with the traditional search result, and presenting the combined result to the user.

Furthermore, after the acquiring search request information submitted by a user and login information of the user, the method further includes:
initiating a request to a privacy control server to query whether the user needs privacy masking, if the privacy masking is needed, setting an identifier for the user, and storing the identifier into a search processing server;
correspondingly, after an SNS index server acquires the SNS search result, the method further includes:
   receiving, by the search processing server, the SNS search result from the SNS index server; and
   masking information containing the identifier in the SNS search result, to obtain the SNS search result experiencing the masking.

In another aspect, embodiments of the present disclosure provide a search apparatus. The apparatus includes: an acquiring module, a sending module, and a searching module; where
the acquiring module is configured to acquire search request information submitted by a user and login information of the user;
the sending module is configured to obtain friend relationship chain data of the user according to the login information of the user, and send the friend relationship chain data of the user to the searching module; and
the searching module is configured to search, according to the search request information and the friend relationship chain data of the user, in SNS data to obtain an SNS search result.

The apparatus further includes a privacy marking module and a masking module.
the privacy marking module is configured to: initiate a request to a privacy control server to query whether the user needs privacy masking, and if the privacy masking is needed, set an identifier for the user, and store the identifier;
correspondingly, the masking module is configured to: after the SNS search result is acquired, mask information containing the identifier in the SNS search result, to obtain the SNS search result experiencing the masking.

In another aspect, embodiments of the present disclosure provide a search system. The system includes: a user understanding server, a search processing server, and an SNS index server.

The search processing server is configured to: acquire search request information submitted by a user and login information of the user; send the login information of the user to the user understanding server; and send the search request information and friend relationship chain data of the user returned by the user understanding server to the SNS index server.

The user understanding server is configured to: acquire, according to the received login information of the user, the friend relationship chain data of the user from data of login information of users and friend relationship chain data of users, and return the acquired friend relationship chain data of the user to the search processing server.

The SNS index server is configured to acquire an SNS search result from SNS data of friends of the user according to the received search request information and friend relationship chain data of the user.

The system further includes: a data access server, a data parsing and mining server, and an SNS search engine.

The data access server is configured to acquire SNS data by using an open platform protocol or a webpage crawler.

The data parsing and mining server is configured to acquire the SNS data sent by the data access server, and obtain the personal information of the user, friend relationship chain data of the user, and the SNS data of the user by parsing and mining the SNS data.

The SNS search engine is configured to send the search request information and the friend relationship chain data of the user that are sent by the search processing server to the SNS index server, and send the SNS search result acquired by the SNS index server to the search processing server.

The system further includes a traditional search engine and a traditional index server.

The search processing server is further configured to send the search request information to the traditional search engine server.

The traditional search engine is configured to send the search request information to the traditional index server, and send a traditional search result acquired by the traditional index server to the search processing server.

The traditional index server is configured to store an inverted index of traditional webpage data, and search out the traditional search result according to the search request information.

The system further includes a privacy control server.

The privacy control server is configured to receive from the search processing server a request querying whether the user needs privacy masking, and return response information, wherein the response information carries information indicating whether the user needs privacy masking.

The search processing server is further configured to receive the response information from the privacy control server, and set an identifier for the user if the response information carries information indicating that the user needs privacy masking; and mask information containing the identifier in the SNS search result and/or the traditional search result.

The technical solutions provided in the embodiments of the present invention achieve the following beneficial effects:

By fully using friend relationship chain data of a user and SNS data, SNS data of user's friends corresponding to search request information input by the user can be searched out in the SNS. The SNS data not only includes personal information of the user, but also includes SNS data posted, shared, and quoted by the user in the SNS. In this way, the user can acquire the SNS data of the friends, and can further find friends having the same interest and hobby from the SNS, thereby enriching search results and bringing greater value to the user.

### BRIEF DESCRIPTION OF THE DRAWINGS

For a better understanding of the technical solutions in the embodiments of the present disclosure, the accompanying drawings for illustrating the embodiments are briefly described below. Apparently, the accompanying drawings in the following description illustrate only some embodiments of the present disclosure, and persons of ordinary skill in the art can derive other accompanying drawings from these accompanying drawings without any creative efforts.
FIG. 1 is a flowchart of a search method according to Embodiment 1 of the present disclosure;
FIG. 2 is a flowchart of an offline search method according to Embodiment 2 of the present disclosure;
FIG. 3 is a flowchart of an online search method according to Embodiment 2 of the present disclosure;
FIG. 4 is a schematic structural diagram of a search apparatus according to Embodiment 3 of the present disclosure; and
FIG. 5 is a schematic structural diagram of a search system according to Embodiment 4 of the present disclosure.

### DETAILED DESCRIPTION OF THE INVENTION

To make the objectives, technical solutions, and advantages of the present disclosure clearer, the embodiments of the present disclosure are described in detail below with reference to the accompanying drawings.

### Embodiment 1

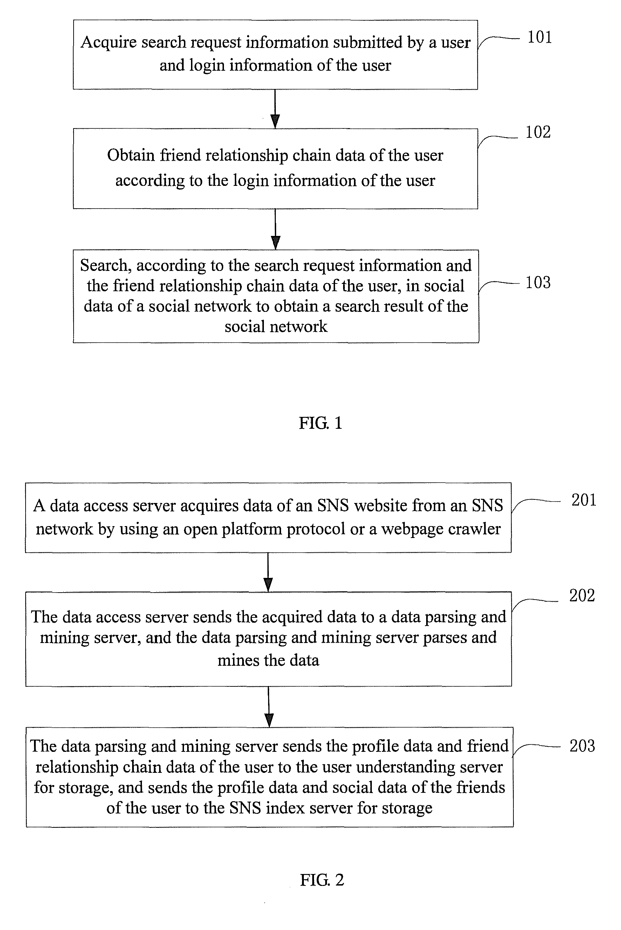

Referring to FIG. 1, this embodiment provides a search method, including the following steps:
step 101: acquiring search request information submitted by a user and login information of the user;
step 102: obtaining friend relationship chain data of the user according to the login information of the user; and
step 103: searching, according to the search request information and the friend relationship chain data of the user, in SNS data to obtain an SNS search result.

According to the method provided in this embodiment, a traditional search engine is combined with an SNS, such that friend relationship chain of a user in the SNS and SNS data of friends of the user can be fully used. In this way, the user is capable of acquiring friend data, data of users having the same interest and hobby, and high quality data based on user recognition from the SNS, thereby enriching search results and bringing great values to the user.

### Embodiment 2

This embodiment provides an SNS-based search method, mainly involving offline process and online process. The offline process is mainly responsible for data mining and index creation, and the details can be referred to step 201 to step 203. The online process is mainly responsible for processing a user search request, and the details can be referred to step 204 to step 214.

Referring to FIG. 2, the offline process mainly involves data access, data parsing, data analysis, and data index creation and storage, which is detailed as follows:
Step 201: A data access server acquires data of an SNS website from an SNS by using an open platform protocol or a webpage crawler.

Specifically, the manner of acquiring the data of the SNS website by the data access server according to this embodiment is different from the prior art. The employed open platform protocol specifically includes the SOSO open platform protocol; and the employed webpage crawler may be sosospider, Gougou, OutfoxBot, or GigaBot, or the like.

The SNS according to this embodiment further includes an SNS logged in to by using an instant messaging tool, for example, TENCENT QQ Weibo network logged in to over TENCENT QQ.

Step 202: The data access server sends the acquired data to a data parsing and mining server, and the data parsing and mining server parses and mines the data.

The result acquired by the data parsing and mining server by parsing and mining of the acquired server mainly includes three types of data: personal information of a user, i.e., user profile data, user friend relationship chain data, and SNS data. These three types of data are respectively described as follows:

The user profile data includes such information as basic information of a user and people rank (i.e., authority) of the user in the SNS. The basic information of the user generally includes: user name, email address, gender, age, education, post, industry, city, and hobby. The user name and email address can both be used as login information of the user. The user profile data contains a mapping relationship between the login information of the user and the user profile data. According to this embodiment, the people rank of the user is acquired to better present the search result to the user. To be specific, the searched information can be ranked according to the people rank thereof, and thus information and data of celebrities who people are interested in is preferentially presented to the user.

Friend relationship chain data of the user includes mutual relationships between the user and the friends, cohesion of the user and the friends.

The SNS date generally includes content posted, quoted, shared, commented, and recommended by the user in the SNS, and importance and social rank of the content.

Step 203: The data parsing and mining server sends the profile data and friend relationship chain data of the user to the user understanding server for storage, and sends the profile data and SNS data of the friends of the user to an SNS index server for storage.

The three types of data acquired by the data parsing and mining server by parsing and mining are respectively sent to the user understanding server and the SNS index server. Specifically, the profile data and friend relationship chain data of the user is sent to the user understanding server, and the profile data and SNS data of the friends of the user is sent to the SNS index server for storage. Therefore, the user understanding server and the SNS index server both stores the profile data of the user.

Specifically, after the offline operation is completed, the user understanding server stores the profile data and friend relationship chain data of the user on the SNS website, such that the user understanding server, after subsequently receiving search request information input by the user from the search processing server, is capable of acquiring the personal information of the user by searching in a mapping relationship between search request information and personal information of users, and thus further capable of acquiring the friend relationship chain data of the user according to a mapping relationship between personal information of users and friend relationship chain data of users. The SNS index server stores the profile data and SNS data of the user on the SNS website, such that the SNS index server is capable of acquiring the SNS data of the friends of the user according to the friend relationship chain data of the user, thereby further performing the search operation in the SNS data of the friends of the user.

The offline operation mentioned above is a basis of SNS search.

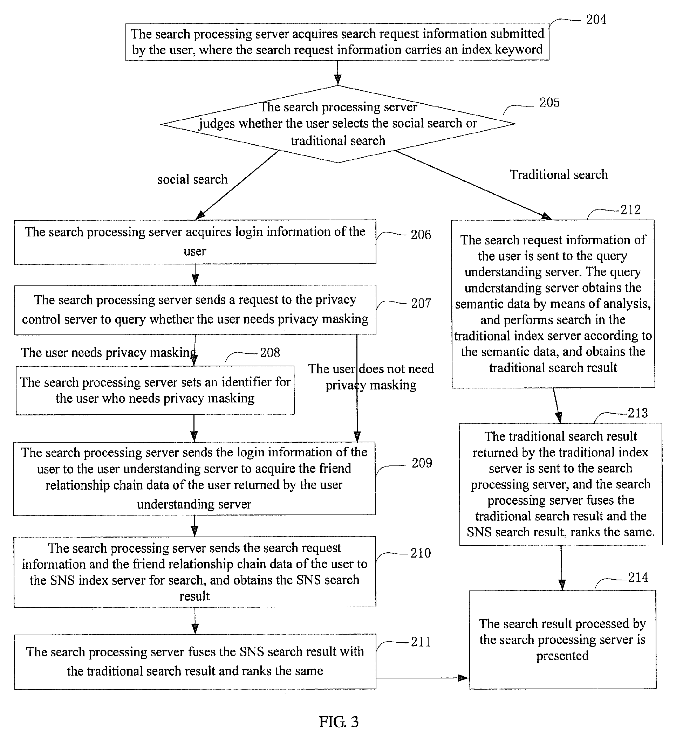

Referring to FIG. 3, the online process according to this embodiment is mainly responsible for acquiring a search result according to the search request of the user, which is detailed as follows:
Step 204: The search processing server acquires search request information submitted by the user, where the search request information carries an index keyword.

The search request information submitted by the user may be such a search keyword field as tennis and news, or may be such a user name field as Li Na.

Specifically, the search processing server receives the search request information submitted by the user; and the search processing server, as a bridge between the user and a search engine, is responsible for acquiring a search result according to the search request information input by the user, and presenting the search result to the user.

Step 205: The search processing server judges whether the user selects the social search or traditional search; if determined that the user selects the social search, the search processing server performs steps 206-211; and if determined that the user selects the traditional search, the search processing server performs steps 212-213.

This step is a preferred step. In practice, it may be defaulted that the user selects the social search and steps 206-209 are performed.

The search processing server sends a query request to a privacy control server, for judging whether the user selects the social search or traditional search. If the user makes no selection before, the search processing server prompts the user to make a selection therebetween, and stores the user's selection information to the privacy control server. In this step, the user may modify the selection information.

Step 206: The search processing server acquires login information of the user.

The login information of the user may be user's email or user name, or any profile data of the user. Specifically, if the user selects the social search, the user needs to log in to his or her SNS account, such that SNS data of the user can be acquired according to the SNS account of the user. The login information of the user mainly includes such information as user name and password.

Step 207: The search processing server sends a request to the privacy control server to query whether the user needs privacy masking; if the user needs privacy masking, the privacy control server returns the user information which needs privacy masking to the search processing server, and performs step 208; and if the user does not need privacy masking, the privacy control server returns no information but performs step 209.

This step is a preferred step. After inputting the login information, the user may set whether his or her SNS data can be searched out. The SNS data of the user specifically includes user profile data, relationship chain data, and data posted, quoted, commented, shared, and recommended by the user. If the user performs privacy masking, his or her SNS data will not be searched out.

Step 208:The search processing server sets an identifier for the user who needs privacy masking.

Step 209: The search processing server sends the login information of the user to the user understanding server to acquire the friend relationship chain data of the user returned by the user understanding server.

Specifically, after the search processing server sends the login information of the user to the user understanding server, the user understanding server analyzes the login information. To be specific, the user understanding server firstly acquires personal information corresponding to the login information of the user from a pre-stored mapping relationship between login information of users and personal information of users according to the login information of the user, and subsequently performs matching in a pre-stored mapping relationship between personal information of users and friend relationship chain data of users according to the personal information of the user to obtain the friend relationship chain data of the user. The user understanding server sends the friend relationship chain data of the user to the SNS index server by using an SNS search engine; and the SNS search engine performs search to obtain an SNS search result.

Furthermore, in this step, the search processing server may also send the search request information of the user to a query understanding server to acquire semantic data that is acquired by the query understanding server by semantically analyzing a search word. The analysis on the search word herein pertains to the prior art, and thus is not described in this embodiment any further. The query understanding server calls a semantic knowledge base and user search behavior data according to the search request information of the user, and analyzes the personal information carried in the received search request information according to the semantic data and the user search behavior data, to obtain the semantic data.

Specifically, the search processing server obtains the friend relationship chain data of the user according to the search request information, and obtains the semantic data according to the search request information; and the user understanding server and the query understanding server both performs an analysis operation. To be specific, the user understanding server obtains the personal information of the user according to the login information of the user, and obtains the friend relationship chain data of the user according to the personal information of the user; and the query understanding server obtains the semantic data by parsing according to the search request information of the user. The user understanding server sends the friend relationship chain data of the user to the SNS index server for search, and obtains an SNS search result, and the query understanding server sends the semantic data to a traditional index server for search, and obtains a traditional search result.

In this case, when the user selects the social search, not only the SNS search result is obtained, but also the traditional search result is obtained. Therefore, the SNS search result and the traditional search result can be concurrently presented to the user, thereby implementing a complete and thorough information presentation to the user. The query understanding server calls the semantic knowledge base and the user search behavior data according to the search request information, and obtains the semantic data corresponding to the search request information by means of analysis.

Step 210: The search processing server sends the search request information and the friend relationship chain data of the user to the SNS index server for search, and obtains the SNS search result.

After the user selects the social search, and the search processing server sends the search request information and the friend relationship chain data of the user to the SNS search engine, the SNS search engine sends the search request information and the friend relationship chain data of the user to the SNS index server such that the SNS index server complete the search operation.

Specifically, the SNS index server acquires the SNS data of the friends of the user from the pre-stored SNS data according to the friend relationship chain data of the user. The SNS data of the friends of the user specifically includes SNS data posted, quoted, shared, commented, and recommended by the friends of the user. The SNS index server further acquires the SNS search result from the SNS data of the friends of the user according to the search request information.

The SNS search result returned by the SNS index server may include the following types of data: profile data of close friends of the user in the SNS and SNS data posted, quoted, shared, commented, and recommended by the close friends; profile data of celebrities who are ranked based on authority in the SNS and SNS data posted quoted, shared, commented, and recommended by the celebrities; SNS data which is ranked based on social rank; and SNS data which is ranked based on importance.

In this step, the search processing server may also send the semantic data to the traditional index server for search, and obtains the traditional search result. Specifically, the search processing server sends the semantic data to the traditional search engine, and the traditional search engine sends the semantic data to the traditional index server such that the traditional index server performs search according to a pre-stored personal information base of the friends of the user, thereby completing the search operation. The traditional index server may also rank the traditional search result. Ranking the searched webpages refers to ranking according to the amount of the data posted, shared, and recommended by the user or the social rank thereof.

The traditional index server acquires data of a website from a web by using an open platform protocol or a webpage crawler, and stores an inverted index of the data of the traditional webpage. In addition, the traditional index server may store such page information as webpage authority, quality, timeliness, type, and subject. After receiving a query analysis result from the traditional search index, the traditional index server acquires the related traditional search result according to the query analysis result.

In practice, the search processing server may send the search request information, the friend relationship chain data of the user acquired by the user understanding server by means of analysis, and the semantic data acquired by the query understanding server by means of analysis to the SNS search engine. The SNS search engine sends these data to the SNS index server for search, so as to acquire the SNS search result corresponding to the search request information and the traditional search result. Alternatively, the SNS search result and the traditional search result may be combined in the traditional index server, and then is returned to the search processing server by using the traditional search engine. The search processing server concurrently presents the SNS search result and the traditional search result.

Step 211: The search processing server combines the SNS search result with the traditional search result and ranks the same, and performs step 214.

Specifically, the combination of the SNS search result and the traditional search result refers to presenting the SNS search result and the traditional search result on the same webpage, facilitating presentation of the search result to the user.

During ranking of the search result, the search processing server may set priorities. For example, if the priorities of the people rank is set to a high-to-low order, in the SNS search result and the traditional search result, the SNS data posted, quoted, commented, shared, and recommended by the user is ranked in a high-to-low order of the priorities of the people rank; if the priorities of the social rank is set to a high-to-low order, in the SNS search result and the traditional search result, the SNS data posted, quoted, commented, shared, and recommended by the user is ranked in a high-to-low order of the priorities of the social rank; the SNS data is ranked according to the social rank thereof or the importance thereof, and content posted or shared by the user is presented.

Step 212: The search request information of the user is sent to the query understanding server. The query understanding server obtains the semantic data by means of analysis, and performs search in the traditional index server according to the semantic data, and obtains the traditional search result.

Specifically, if the user selects the traditional search in step 205, the search processing server sends the search request information submitted by the user in step 204 to the query understanding server only, and acquires the semantic data by means of analysis; and further sends the semantic data to the traditional index server for search, and obtains the traditional search result.

Step 213: The traditional search result returned by the traditional index server is sent to the search processing server, and the search processing server combines the traditional search result with the SNS search result, ranks the same, and performs step 214.

The processing of combining the tradition search result with the SNS search result and ranking the same are similar to the operation in step 210, which is not described herein any further. The search processing server may finally present the above traditional search result to the user.

Step 214: The search result processed by the search processing server is presented.

Specifically, if the user selects the social search, the search result in this step is a combination of the SNS search result returned by the SNS search engine and the traditional search result returned by the traditional search engine; and if, in step 208, the search processing server sets an identifier for the user who needs privacy masking, during presentation of the search result to the user, the information containing the identifier in the SNS search result is masked, and the SNS search result experiencing the masking is presented to the user.

If the user selects the traditional search, the result in this step is only a result of ranking the traditional search result returned by the traditional search engine.

Furthermore, according to this embodiment, for a reduction of coupling in terms of data, an SNS search engine may be created for individually providing services for the user. This SNS search engine performs vertical search among the social search and the traditional search, i.e., performing the social search and the traditional search independently to obtain the SNS search result and the traditional search result respectively. After the SNS search result and the traditional search result are obtained, the SNS search result obtained by the social search may be loaded to the traditional search result, such that the SNS search result and the traditional search result are concurrently presented to the user.

Furthermore, according to this embodiment, the SNS index server and the traditional index server may be combined into one index server. To be specific, the SNS search result and the traditional search result may be combined in terms of index. During the social search, the operations to be performed by the SNS index server are all performed by the traditional index server, for example, receiving the user profile data and the data posted, shared, and recommended by the user, and searching for the SNS search result of the user according to an analysis result sent by the SNS search engine. With this technical solution, since only one index server is employed, the SNS search result and traditional index data are combined in terms of data, enabling a compact structure in terms of data.

According to the method provided in this embodiment, a traditional search engine is combined with an SNS, such that friend relationship chain of a user in the SNS and data posted, shared, commented, and recommended by friends of the user can be fully used. In this way, the user is capable of acquiring friend data, data of users having the same interest and hobby, and high quality data based on user recognition from the SNS, thereby enriching search results and bringing great values to the user, who can participate in interaction in the result. In addition, during the SNS-based search, the user may publish or not publish his or her SNS data, and only a user who publishes his or her SNS data can be detected by other users. This mechanism prevents privacy leakage of the user, and thus improves user experience.

### Embodiment 3

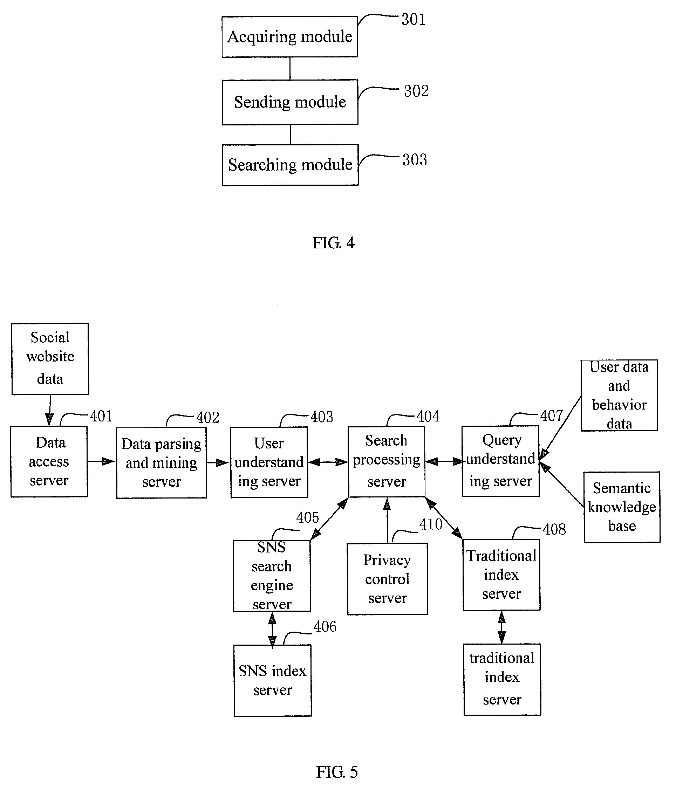

Referring to FIG. 4, this embodiment provides a search apparatus. The apparatus includes: an acquiring module 301, a sending module 302, and a searching module 303.

The acquiring module 301 is configured to acquire search request information submitted by a user and login information of the user.

The sending module 302 is configured to obtain friend relationship chain data of the user according to the login information of the user, and send the friend relationship chain data of the user to the searching module.

The searching module 303 is configured to search, according to the search request information and the friend relationship chain data of the user, in SNS data to obtain an SNS search result.

Furthermore, the apparatus further includes a privacy marking module and a masking module.

The privacy marking module is configured to: initiate a request to a privacy control server to query whether the user needs privacy masking, and if the privacy masking is needed, set an identifier for the user, and store the identifier.

Correspondingly, the masking module is configured to: after the SNS search result is acquired, mask, according to the identifier, information containing the identifier in the SNS search result, to obtain the SNS search result experiencing the masking.

The apparatus further includes a pre-processing module, configured to acquire SNS data by using an open platform protocol or a webpage crawler, where the SNS data includes personal information of a user, friend relationship chain data of a user, and SNS data of a user.

According to the apparatus provided in this embodiment, a traditional search engine is combined with an SNS, such that friend relationship chain of a user in the SNS and data posted, shared, commented, and recommended by friends of the user can be fully used. In this way, the user is capable of acquiring friend data, data of users having the same interest and hobby, and high quality data based on user recognition from the SNS, thereby enriching search results and bringing great values to the user, who can participate in interaction in the result. In addition, during the SNS-based search, the user may publish or not publish his or her SNS data, and only a user who publishes his or her SNS data can be detected by other users. This mechanism prevents privacy leakage of the user, and thus improves user experience.

The search apparatus provided in this embodiment is based on the same inventive concept as the method embodiments. Therefore, the detailed implementation can refer to the description of the method embodiments of the present disclosure, which is not described herein any further.

A person skilled in the art should understand that all or part of steps of the preceding methods may be implemented by hardware or hardware following instructions of programs. The programs may be stored in a computer readable storage medium. The storage medium may be a read only memory, a magnetic disk, or a compact disc-read only memory.

### Embodiment 4

Referring to FIG. 5, this embodiment provides a search system. The system includes: a user understanding server 403, a search processing server 404, and an SNS index server 406.

The search processing server 404 is configured to: acquire search request information submitted by a user and login information of the user; send the login information of the user to the user understanding server 403; and send the search request information and friend relationship chain data of the user returned by the user understanding server 403 to the SNS index server 406.

The user understanding server 403 is configured to: acquire, according to the received login information of the user, the friend relationship chain data of the user from a pre-stored mapping relationship between personal information of users and friend relationship chain data of users, and return the acquired friend relationship chain data of the user to the search processing server 404.

The SNS index server 406 is configured to acquire an SNS search result from pre-stored SNS data of friends of the user according to the received search request information and friend relationship chain data of the user.

Furthermore, the system further includes: a data access server 401, a data parsing and mining server 402, and an SNS search engine 405.

The data access server 401 is configured to acquire SNS data by using an open platform protocol or a webpage crawler.

The data parsing and mining server 402 is configured to acquire the SNS data sent by the data access server, and obtain the personal information of the user, friend relationship chain data of the user, and the SNS data of the user by parsing and mining the SNS data.

The SNS search engine 405 is configured to send the search request information and the friend relationship chain data of the user that are sent by the search processing server to the SNS index server, and send the SNS search result acquired by the SNS index server 406 to the search processing server 404.

Furthermore, the system further includes: a query understanding server 407, a traditional search engine 408, and a traditional index server 409.

The search processing server 404 is further configured to send the search request information to the query understanding server.

The query understanding server 407 is configured to analyze the search request information sent by the search processing server to obtain semantic data, and send the semantic data to the traditional search engine.

The traditional search engine 408 is configured to send the semantic data to the traditional index server, and send a traditional search result acquired by the traditional index server to the search processing server.

The traditional index server 409 is configured to store an inverted index of traditional webpage data, and search out the traditional search result according to the search request information.

Furthermore, the system further includes a privacy control server 410.

The privacy control server 410 is configured to receive from the search processing server 404 a request querying whether the user needs privacy masking, and return response information, wherein the response information carries information indicating whether the user needs privacy masking.

The search processing server 404 is further configured to receive the response information from the privacy control server 410, and set an identifier for the user if the response information carries information indicating that the user needs privacy masking; and mask information containing the identifier in the SNS search result.

According to the apparatus provided in this embodiment, a traditional search engine is combined with an SNS, such that friend relationship chain of a user in the SNS and SNS data of friends of the user can be fully used. In this way, the user is capable of acquiring friend data, data of users having the same interest and hobby, and high quality data based on user recognition from the SNS, thereby enriching search results and bringing great values to the user, who can participate in interaction in the result. In addition, during the SNS-based search, the user may publish or not publish his or her SNS data, and only a user who publishes his or her SNS data can be detected by other users. This mechanism prevents privacy leakage of the user, and thus improves user experience.

The search system provided in this embodiment is based on the same inventive concept as the method embodiments. Therefore, the detailed implementation can refer to the description of the method embodiments of the present disclosure, which is not described herein any further.

A person skilled in the art may clearly understand that the described apparatus or system embodiments are merely exemplary. Specifically, the unit/module division is merely logical function division and can be other division in actual implementation. For example, various function units/modules in the embodiments of the present disclosure may be integrated in a processing unit/module, or physically independent units/modules; or two or more than two function units/modules may be integrated into a unit/module. The integrated unit/module may be implemented in a form of hardware, or may be implemented in a form of a software functional unit/module.

A person skilled in the art should understand that all or part of steps of the preceding methods may be implemented by hardware or hardware following instructions of programs. The programs may be stored in a computer readable storage medium. The storage medium may be a read only memory, a magnetic disk, or a compact disc-read only memory.

Described above are merely preferred embodiments of the present disclosure, but are not intended to limit the present disclosure. Any modification, equivalent replacement, or improvement made without departing from the spirit and principle of the present disclosure should fall within the protection scope of the present disclosure.

## Claims

1. A search method, comprising:
acquiring search request information submitted by a user and login information of the user;
obtaining friend relationship chain data of the user according to the login information of the user; and
searching, according to the search request information and the friend relationship chain data of the user, in social networking service (SNS) data to obtain an SNS search result.

2. The method according to claim 1, wherein the obtaining friend relationship chain data of the user according to the login information of the user specifically comprises:
according to the login information of the user, performing matching in a mapping relationship between login information of users and personal information of users to obtain personal information of the user; and
according to the personal information of the user, performing matching in the mapping relationship between personal information of users and friend relationship chain data of users to obtain the friend relationship chain data of the user.

3. The method according to claim 1, wherein the searching, according to according to the search request information and the friend relationship chain data of the user, in SNS data to obtain an SNS search result specifically comprises:
according to the friend relationship chain data of the user, acquiring SNS data of friends of the user from SNS data in an SNS index server; and
according to the search request information, searching in the SNS data of the friends of the user to obtain the SNS search result.

4. The method according to claim 1, wherein after the acquiring search request information submitted by a user and login information of the user, the method further comprises:
according to the search request information, searching in a mapping relationship between search keywords and personal information bases of users, to obtain a traditional search result; and
combining the search result of the social networking service with the traditional search result, and presenting the combined result to the user.

5. The method according to claim 1, wherein after the acquiring search request information submitted by a user and login information of the user, the method further comprises:
initiating a request to a privacy control server to query whether the user needs privacy masking, and if the privacy masking is needed, setting an identifier for the user, and storing the identifier into a search processing server;
correspondingly, after an SNS index server acquires the SNS search result, the method further comprises:
receiving, by the search processing server, the SNS search result from the social networking service index server; and
masking information containing the identifier in the SNS search result, to obtain the SNS search result experiencing the masking.

6. A search apparatus, comprising an acquiring module, a sending module, and a searching module; wherein
the acquiring module is configured to acquire search request information submitted by a user and login information of the user;
the sending module is configured to obtain friend relationship chain data of the user according to the login information of the user, and send the friend relationship chain data of the user to the searching module; and
the searching module is configured to search, according to the search request information and the friend relationship chain data of the user, in social networking service (SNS) data to obtain an SNS search result.

7. The apparatus according to claim 6, further comprising a privacy marking module and a masking module; wherein
the privacy marking module is configured to: initiate a request to a privacy control server to query whether the user needs privacy masking, and if the privacy masking is needed, set an identifier for the user, and store the identifier;
correspondingly, the masking module is configured to: after the SNS search result is acquired, mask, according to the identifier, information containing the identifier = in the SNS search result, to obtain the SNS search result experiencing the masking.

8. A search system, comprising: a search processing server, a user understanding server, and a social networking service (SNS) index server; wherein
the search processing server is configured to: acquire search request information submitted by a user and login information of the user; send the login information of the user to the user understanding server; and send the search request information and friend relationship chain data of the user returned by the user understanding server to the SNS index server;
the user understanding server is configured to: acquire, according to the received login information of the user, the friend relationship chain data of the user from a mapping relationship between personal information of users and friend relationship chain data of users, and return the acquired friend relationship chain data of the user to the search processing server; and
the SNS index server is configured to acquire an SNS search result from SNS data of friends of the user according to the received search request information and friend relationship chain data of the user.

9. The system according to claim 8, further comprising: a data access server, a data parsing and mining server, and a social networking service (SNS) search engine; wherein
the data access server is configured to acquire SNS data by using an open platform protocol or a webpage crawler;
the data parsing and mining server is configured to acquire the SNS data sent by the data access server, and obtain the personal information of the user, friend relationship chain data of the user, and the SNS data of the user by parsing and mining the SNS data; and
the SNS search engine is configured to send the search request information and the friend relationship chain data of the user that are sent by the search processing server to the SNS index server, and send the SNS search result acquired by the SNS index server to the search processing server.

10. The system according to claim 8, further comprising: a query understanding server, a traditional search engine, and a traditional index server; wherein
the search processing server is further configured to send the search request information to the query understanding server;
the query understanding server is configured to analyze the search request information sent by the search processing server to obtain semantic data, and send the semantic data to the traditional search engine;
the traditional search engine is configured to send the semantic data to the traditional index server, and send a traditional search result acquired by the traditional index server to the search processing server; and
the traditional index server is configured to store an inverted index of traditional webpage data, and search out the traditional search result according to the search request information.

11. The system according to claim 9 or 10, further comprising a privacy control server;
wherein
the privacy control server is configured to receive from the search processing server a request querying whether the user needs privacy masking, and return response information, wherein the response information carries information indicating whether the user needs privacy masking; and
the search processing server is further configured to receive the response information from the privacy control server, and set an identifier for the user if the response information carries information indicating that the user needs privacy masking; and mask information containing the identifier in the SNS search result.
